# EUROPÄISCHE PATENTANMELDUNG

(11) **EP 4 212 489 A1**
(43) Veröffentlichungstag der Anmeldung: **19.07.2023**
(21) Anmeldenummer: 22151978.8
(22) Anmeldetag: 18.01.2022
(51) Int. Cl.: C03B 37/012

(54) **VERFAHREN UND HALBZEUG ZUR HERSTELLUNG EINER MEHRKERNFASER**

(71) Anmelder: Heraeus Quarzglas GmbH & Co. KG, 63450 Hanau (DE)
(72) Erfinder: Schuster, Kay, 06803 Bitterfeld-Wolfen (DE); Lorenz, Michael, 06803 Bitterfeld-Wolfen (DE); Hünermann, Michael, 63801 Kleinostheim (DE); Tiess, Tobias, 06803 Bitterfeld-Wolfen (DE); Kayser, Thomas, 06803 Bitterfeld-Wolfen (DE); Böttcher, Martin, 06803 Bitterfeld-Wolfen (DE); Rosenberger, Manuel, 63450 Hanau (DE)
(74) Vertreter: Heraeus IP

(57) **Zusammenfassung**

Bekannte Verfahren zur Herstellung einer Mehrkernfaser umfassen einen Verfahrensschritt, bei dem ein Bauteil-Ensemble zu der Mehrkernfaser oder zu einer Vorform 10 für die Mehrkernfaser umgeformt wird, das einen eine Mittenbohrung 2 und eine Hohlzylinder-Längsachse aufweisenden Hohlzylinder 1 umfasst, der einen Mantelglasbereich 1b aus Mantelglas und mehrere mit einem Kernglas belegte Kernglasbereiche 4a aufweist, wobei mindestens ein Teil der Mittenbohrung von einem Glas-Füllmaterial 5belegt ist. Um hiervon ausgehend ein Verfahren zur Herstellung von Mehrkernfasern ohne zentralen Signalkern anzugeben, bei dem die Gefahr von Ausschuss bei der Fertigstellung des Mantelglas-Hohlzylinder vermindert ist, wird vorgeschlagen, dass ein an das Glas-Füllmaterial angrenzendes Markerelement 6,7,8 aus Markerglas eingesetzt wird, das sich entlang der Mittenbohrung-Längsachse erstreckt.

## Beschreibung

### Technischer Hintergrund

Die vorliegende Erfindung betrifft ein Verfahren zur Herstellung einer Mehrkernfaser, umfassend einen Verfahrensschritt, bei dem ein Bauteil-Ensemble zu der Mehrkernfaser oder zu einer Vorform für die Mehrkernfaser umgeformt wird, das einen eine Mittenbohrung und eine Hohlzylinder-Längsachse aufweisenden Hohlzylinder umfasst, der einen Mantelglasbereich aus Mantelglas und mehrere mit einem Kernglas belegte Kernglasbereiche aufweist, wobei mindestens ein Teil der Mittenbohrung von einem Glas-Füllmaterial belegt ist.

Außerdem betrifft die Erfindung ein Halbzeug zur Herstellung einer Mehrkernfaser, umfassend einen eine Mittenbohrung und eine Hohlzylinder-Längsachse aufweisenden Hohlzylinder, der einen Mantelglasbereich aus Mantelglas und mehrere mit einem Kernglas belegte Kernglasbereiche innerhalb des Mantelglasbereichs aufweist, wobei mindestens ein Teil der Mittenbohrung von einem Glas-Füllmaterial belegt ist.

Bei Mehrkernfasern sind mehrere lichtwellenleitende, optische Kernbereiche (im Folgenden auch als "Signalkerne" bezeichnet) in einer gemeinsamen Faser integriert. Die Signalkerne erstrecken sich entlang der Faserlängsachse. Sie sind von Mantelmaterial mit geringerem Brechungsindex umgeben und ermöglichen eine voneinander unabhängige Lichtführung. Dieses Faser-Design verspricht eine hohe Kapazität der Signalübertragung, weil in einer einzigen optischen Faser zusammengefasst unterschiedliche Signale simultan in jedem der räumlich getrennten Signalkerne übertragen werden können. Diese Methode der Signalübertragung wird auch als "räumliches Multiplexing" bezeichnet, was insbesondere die Daten-Übertragungskapazität in der optischen Telekommunikation erhöhen kann. Mehrkernfasern gelten außerdem als Schlüsselkomponenten zur Übertragung von Energie zur Materialbearbeitung, als Bestandteil faseroptischer Sensoren in der Mess- und Medizintechnik sowie für Beleuchtungs- und Abbildungszwecke in mikroskopischen oder endoskopischen Geräten.

### Stand der Technik

Mehrkernfasern werden durch Elongieren einer massiven Vorform oder eines Ensembles von Bauteilen erzeugt. Diese bestehen häufig aus synthetisch erzeugtem Quarzglas (SiO₂), das dotiert oder undotiert sein kann. Die Herstellung von synthetischem Quarzglas umfasst beispielsweise Plasma- oder CVD-Abscheidemethoden, die unter den Bezeichnungen OVD-, VAD-, MCVD-, PCVD- oder FCVD-Verfahren bekannt sind. Dabei wird eine flüssige oder gasförmige siliziumhaltige Ausgangssubstanz einer chemischen Reaktion (Hydrolyse, Pyrolyse oder Oxidation) unterzogen und das Reaktionsprodukt - teilchenförmiges SiO₂ - als Feststoff aus der Gasphase auf einer Ablagerungsfläche abgeschieden. Die Ausgangssubstanz ist beispielsweise Siliciumtetrachlorid (SiCl₄) oder eine chlorfreie Siliziumverbindung wie etwa ein Polyalkylsiloxan. Die Reaktionszone ist beispielsweise ein Ofen, eine Brennerflamme oder ein Lichtbogen (Plasma).

Beim sogenannten "Stack-and-Draw-Verfahren" werden Kernstäbe und Glaszylinder unterschiedlicher Durchmesser so zusammengestapelt, dass sie eine relativ hohe Packungsdichte und eine gewisse Symmetrie ergeben. Die zylinderförmigen Bauteile werden in ein Hüllrohr eingeführt und darin räumlich fixiert. Dieses Ensemble wird zu der Mehrkernfaser gezogen oder es wird vorab zu einer Vorform weiterverarbeitet, aus der anschließend die Mehrkernfaser gezogen wird.

Das "Stack-and-Draw-Verfahren" erfordert einen hohen Justageaufwand und es führt leicht zu Maßhaltigkeitsfehlern und zum Eintrag von Verunreinigungen infolge des großen Anteils freier Bauteil-Oberflächen. Zudem weist die elongierte Vorform wegen Unterschieden in der radialen Packungsdichte häufig unterschiedliche Radiuswerte in azimutaler Richtung auf, die durch Rundschleifen ausgeglichen werden müssen.

Bei einer anderen bekannten Verfahrensweise zur Herstellung einer Vorform für eine Mehrkernfaser, wie sie beispielsweise in der US 2021/0300812 A1 beschrieben ist, werden durch Längsperforation eines Mantelglas-Zylinders auf Basis von synthetischem SiO₂ eine Vielzahl von Durchgangslöchern erzeugt, die in Richtung der Zylinderlängsachse verlaufen. In die Durchgangslöcher wird jeweils ein Kernstab eingesetzt, der ein Kernmaterial mit größerem Brechungsindex als das Glas des Mantelglas-Zylinders enthält. Bei einer großen Anzahl von Durchgangslöchern kann zwischen benachbarten Löchern eine dünne und leicht zerbrechliche Wandung verbleiben. Um die Bruchgefahr zu verringen, wird vorgeschlagen, die notwendige Anzahl an Durchgangslöcher im Mantelglas-Zylinder sukzessive zu erzeugen, und zwischenzeitlich mindestens einen Teil der Durchgangslöcher mit einem Kernstab zu belegen und zu verschmelzen.

Der Mantelglas-Zylinder ist langgestreckt. Die Durchgangslöcher haben ein großes Aspektverhältnis (Verhältnis von Länge und Durchmesser), was grundsätzlich deren maßgenaue Fertigung und exakte Ausrichtung parallel zur Längsachse des Mantelglas-Hohlzylinders erschwert.

Bei den aus der US 2015/284286 A1 und aus der US 2015/0307387 A1 bekannten Verfahren wird ein Mantelglas-Hohlzylinder in Form eines nach dem OVD-Verfahren erzeugten Sootkörpers auf Basis von SiO₂ verwendet (SiO₂-Sootkörper), der eine Dichte zwischen 0,8 g/cm³ und 1,6 g/cm³ aufweist. Beim OVD-Verfahren ist die Ablagerungsfläche im Allgemeinen die Außenmantelfläche eines um seine Längsachse rotierenden stab- oder rohrförmigen Abscheidedorns. Durch reversierende Hin- und Herbewegung der Reaktionszone wird ein im Wesentlichen zylinderförmiger Sootkörper abgeschieden. Nach Abschluss des Abscheideprozesses wird der Abscheidedorn entfernt, so dass eine zentrale Durchgangsöffnung in der Mittelachse des zylinderförmigen Sootkörpers verbleibt. In den so erzeugten Mantelglas-Hohlzylinder werden Längsbohrungen zur Aufnahme von Kernglasstäben eingebracht, wobei die im Vergleich zu Quarzglas geringere Dichte des SiO₂-Sootkörpers die Herstellung maßgenauer Längsbohrungen erleichtert. Die herstellungsbedingt verbleibende zentrale "OVD-Durchgangsöffnung" kann beim Kollabieren zu asymmetrischen Verformungen führen und das Faser-Design zerstören. Außerdem verringert sich durch Kollabieren die Querschnittsfläche des Mantelglasanteils. Diese Nachteile können durch Einsetzen eines die OVD-Durchgangsöffnung verschließenden Füllstabes verhindert werden. Der Füllstab besteht aus Glas, das im Wesentlichen den gleichen Brechungsindex hat wie der Mantelglas-Hohlzylinder. Der Füllstab kann ebenfalls durch ein OVD-Verfahren oder durch Pressformen oder durch eine Kombination aus Pressformen und OVD-Verfahren hergestellt werden. Außerdem wird in den Mantelglas-Hohlzylinder ein Kanal zur Aufnahme eines Markerelements eingebracht. Der Kanal wird im randnahen Bereich des Mantelglas-Hohlzylinders durch mechanisches Bohren erzeugt.

Die Markerelemente bilden in der Mehrkernfaser durchgängige, linienartige Markerzonen und dienen zur Symmetriebrechung, um die Signalkerne sowie deren Positionen zueinander und in Bezug auf die Faser-Mittelachse eindeutig identifizieren und zuordnen zu können. Dies ist beispielsweise erforderlich, damit zwei Mehrkernfasern über ihre Stirnseiten mittels herkömmlicher Spleißmethoden dämpfungsarm zusammengefügt werden können.

Zum Spleißen der Mehrkernfaser werden die zu verbindenden Faserenden so angeordnet, dass ihre Stirnseiten einander zugewandt sind. Bei einer bekannten Methode wird am gegenüberliegenden Faserende in alle Signalkerne gleichzeitig Licht eingespeist, und am Faserende der anderen Mehrkernfaser kollektiv mittels Fotodetektor und Leistungsmesser erfasst. Insbesondere in Fällen, bei denen das eine Ende der Mehrkernfaser zur Lichteinspeisung nicht verfügbar ist, wird diese Mehrkernfaser seitlich mit Licht durchstrahlt. Durch Relativ-Verschiebung der Mehrkernfaser-Stirnseiten in horizontaler und vertikaler Richtung und durch RelativVerdrehung in azimutaler Richtung werden die Faserenden in einer Fusionsspleißmaschine automatisiert solange zueinander ausgerichtet, bis die Signalkerne einander richtig zugeordnet sind und die kollektive empfangene Lichtleistung maximal wird, und dann in dieser Position miteinander verschmolzen.

### Technische Aufgabe

Je größer die Anzahl an Mehrfachkernen ist, umso größer ist theoretisch die Zunahme der Daten-Übertragungskapazität im Vergleich zu einem Lichtwellenleiter mit einem einzigen Faserkern (Einzelmodenfaser oder Mehrmodenfaser). Andererseits besteht grundsätzlich die Anforderung, dass jeder der Mehrfachkerne eine optische Dämpfung hat, die in etwa der eines Lichtwellenleiters mit Einzelkern entspricht. Dies erfordert, dass das Faserdesign keine zusätzliche Dämpfung verursacht oder die unabhängige Informationsübertragung der Signalkerne als Störsignal beeinträchtigt. Dies kann aber durch ein sogenanntes "Übersprechen" zwischen den Mehrfachkernen insbesondere dann verursacht werden kann, wenn diese zu dicht beieinander liegen. Dieser Effekt erfordert somit die Einhaltung eines gewissen Mindestabstands zwischen den Faserkernen. Aus diesen Gründen besteht das Bedürfnis, die im radialen Querschnitt der Mehrkernfaser zur Verfügung stehende Querschnittsfläche möglichst vollständig für die Belegung mit den Mehrfachkernen zu nutzen.

Die in das Faser-Design zusätzlich einzufügenden Markerzonen sollten daher einen kleinen Anteil am Faserquerschnitt einnehmen. Eine geringe Größe der Markerzonen ist auch vorteilhaft, um anderen unerwünschten Effekten entgegenzuwirken, wie beispielsweise dem sogenannten Faser-Curl oder in der Faser induzierten Spannungen. Der Durchmesser des Kanals zur Aufnahme des Markerelements ist daher gering und in der Regel deutlich kleiner als der Durchmesser der Bohrungen für die Aufnahme der Kernstäbe. Typischerweise liegt der Kanal-Durchmesser im Mantelglas-Hohlzylinder vor dem Faserziehprozess bei weniger als 15mm, einhergehend mit einem Aspektverhältnis oberhalb von 65 (bei einer Hohlzylinderlänge von etwa 1m).

Die maßgenaue Herstellung und exakte Ausrichtung derartig dünner Kanäle in einem Mantelglas-Hohlzylinder ist selbst bei Einsatz von Hochpräzisions-Bohrmaschinen schwierig. Außerdem hat es sich gezeigt, dass gerade beim Bohren dünner Kanäle verstärkt Risse in der Kanalwandung erzeugt werden. Der Kostenaufwand für die Herstellung des Mantelglas-Hohlzylinders aus synthetischem Quarzglas ist groß und der Verlust besonders schmerzlich, wenn ausgerechnet die kleine Bohrung für die Aufnahme des Markerelements zum Ausschuss des ansonsten fertiggestellten Mantelglas-Hohlzylinders führt.

Erschwerend kommt hinzu, dass das Schneiden und Spleißen der Mehrkernfaser gemäß den spezifischen Anforderungen beim bestimmungsgemäßen Einsatz an jeder beliebigen Position erfolgen kann, so dass auf eine konsistente Geometrie entlang der gesamten Faserlänge vertraut werden muss, um nicht auf Messungen angewiesen zu sein.

Der Erfindung liegt daher die Aufgabe zugrunde, ein Verfahren zur Herstellung von Mehrkernfasern ohne zentralen Signalkern anzugeben, bei dem die Gefahr von Ausschuss bei der Fertigstellung des Mantelglas-Hohlzylinder vermindert ist. Außerdem liegt der Erfindung die Aufgabe zugrunde ein Halbzeug bereitzustellen, das geeignet ist zur Herstellung einer Mehrkernfaser ohne zentralen Signalkern, die sich insbesondere durch einen geringen "Faser-Curl" auszeichnet.

Als "Faser-Curl" wird eine Eigenschaft von Glasfasern bezeichnet, die als Krümmungsgrad über eine bestimmte Länge der Faser definiert ist. Die Krümmung resultiert aus thermischen Spannungen, die während der Faserherstellung entstehen. Eine hohes "Faser-Curl" erschwert das dämpfungsarme Spleißen der Mehrkernfaser.

### Allgemeine Beschreibung der Erfindung

Hinsichtlich des Verfahrens wird diese Aufgabe ausgehend von dem eingangs genannten Verfahren erfindungsgemäß dadurch gelöst, ein an das Glas-Füllmaterial angrenzendes Markerelement aus Markerglas eingesetzt wird, das sich entlang der Mittenbohrung-Längsachse erstreckt.

Es wird ein Mantelglas-Hohlzylinder eingesetzt, der eine Mittenbohrung aufweist. Derartige Hohlzylinder werden beispielsweise und bevorzugt anhand des OVD-Verfahrens (Outside Vapor Deposition) erhalten, nachdem der Abscheidedorn entfernt worden ist. Die Herstellung von Mantelglas-Hohlzylindern nach dem OVD-Verfahren ist kostengünstig im Vergleich zu anderen Herstellungsmethoden, insbesondere im Vergleich zum VAD-Verfahren (Vapor Phase Axial Deposition). Sie geht allerdings mit dem Nachteil einher, dass die erwähnte zentrale Mittenbohrung verbleibt. Diese kann vollständig oder teilweise mittels eines Glas-Füllmaterials verschlossen werden, das bevorzugt bereitgestellt wird durch mehrere Füllstäbe oder durch einen einzigen Füllstab, der das Glas-Füllmaterial enthält.

Bei Ausführungsformen, bei denen die chemische Zusammensetzung des Glas-Füllmaterials derjenigen des Mantelglases entspricht, bildet das Glas-Füllmaterial in der Mehrkernfaser einen Teil des optischen Mantels. Bei Ausführungsformen, bei denen sich die chemischen Zusammensetzungen von Glas-Füllmaterial und Mantelglas unterscheiden, kann dem Glas-Füllmaterial in der Mehrkernfaser eine zusätzliche Funktion zufallen, beispielsweise kann es als "Stresszone" wirken, die in radialer Richtung wirkende Druck- oder Zugspannungen innerhalb der Faser erzeugt und/oder kompensiert.

Das erfindungsgemäße Verfahren dient zur Herstellung einer Mehrkernfaser ohne zentralen Signalkern. Die zentrale Mittenbohrung wird dafür genutzt, um zusätzlich zum Glas-Füllmaterial ein Markerelement einzufügen. Das Glas-Füllmaterial enthält keinen für die Signalübertragung geeigneten Kernbereich.

Das Markerelement liegt im Bauteil-Ensemble als Bauteil, als Beschichtung eines Bauteils oder als Hohlraum vor und bildet in der Mehrkernfaser eine durchgängige, linienartige Markerzone aus einem Markermaterial oder aus Luft. Die Markerzone kann beispielsweise beim Spleißen zur Symmetriebrechung und zur eindeutigen Identifizierung der Signalkerne sowie deren Positionen zueinander und in Bezug auf die Faser-Mittelachse dienen.

Das Markerelement wird im oder am Glas-Füllmaterial angeordnet. Es befindet sich beispielsweise in einem Hohlkanal, der sich durch das Glas-Füllmaterial entlang der Hohlzylinder-Längsachse erstreckt. Das Glas-Füllmaterial bildet in dem Fall die Umrandung eines Markerelements in Form eines luftgefüllten, langgestreckten Hohlraums. Oder das Markerelement ist am Außenmantel eines zylinderförmigen Glas-Füllmaterials angebracht.

Da sich das Markerelement im oder am Glas-Füllmaterial und damit innerhalb der Mittenbohrung des Mantelglas-Hohlzylinders aber nicht im Mantelglas des Hohlzylinders befindet, entfällt die Notwendigkeit dafür, den Mantelglas-Hohlzylinder zwecks Einfügung des Markerelements anzupassen, beispielsweise durch eine mechanische Bearbeitung und insbesondere durch Erzeugung einer Bohrung für die Aufnahme des Markerelements im Mantelglas-Hohlzylinder. Das mit einer derartigen Anpassung des Mantelglas-Hohlzylinders einhergehende Beschädigungsrisiko entfällt somit.

Die Maßhaltigkeit und die Geradheit der Mittenbohrung des Mantelglas-Hohlzylinders können durch das OVD-Herstellungsverfahren selbst und - sofern erforderlich - durch nachfolgende Maßnahmen einfach gewährleistet werden. Zu den dafür geeigneten nachfolgenden Maßnahmen gehören beispielsweise eine mechanische Nachbearbeitung der Mittenbohrung und/oder ein Elongierprozess, dem der im OVD-Abscheideprozess erzeugte Ausgangs-Hohlzylinder unterzogen wird, um daraus einen Rohrstrang zu elongieren, aus dem der Mantelglas-Hohlzylinder erzeugt wird oder aus dem mehrere Mantelglas-Hohlzylinder abgelängt werden. Der Elongierprozess erfolgt vorzugsweise ohne Einsatz eines Formwerkzeugs, das am abgezogenen Rohrstrangs angreift, um Beschädigungen der Rohrstrang-Oberfläche zu vermeiden.

Ebenso können die Maßhaltigkeit und die Geradheit eines das Glas-Füllmaterial enthaltenden und passgenau in die Mittenbohrung einzusetzenden Zylinders; insbesondere eines Füllstabs, durch mechanische Bearbeitung und/oder mittels eines derartigen Elongierprozesses vergleichsweise einfach gewährleistet werden. Diese mechanische Bearbeitung kann gegebenenfalls ein Außenbearbeitungsverfahren sein, was in der Regel deutlich weniger aufwändig ist als ein Innenbearbeitungsverfahren.

Eine achsenparallele Ausrichtung des Markerelements wird dadurch erleichtert, indem es an das Glas-Füllmaterial angrenzt.

Die vergleichsweise einfach zu erreichende Geradheit von Glas-Füllmaterial und Mittenbohrung erleichtern auch die achsenparallele Ausrichtung des Markerelements. Dies gilt insbesondere für eine besonders bevorzugte Verfahrensweise bei der das Markerelement zwischen dem Glas-Füllmaterial und dem Mantelglasbereich angeordnet wird.

Somit wird das Bauteil-Ensemble mit einem Markerelement ausgestattet, ohne dass dafür eine separate Bohrung im Mantelglas-Hohlzylinder - verbunden mit den oben erläuterten Risiken und Schwierigkeiten - erzeugt werden muss. Gleichzeitig kann trotz hohem Aspektverhältnis eine hohe Genauigkeit gewährleistet werden, die sich beispielsweise in der Vorform beziehungsweise im Bauteil-Ensemble darin manifestiert, dass die Achsenparallelität des Markerelements eine Abweichung von weniger als 0,3mm/m hat.

Bei einer Verfahrensweise liegt das Markerelement als Stab vor, der sich parallel zu einem Füllstab oder zu mehreren Füllstäben innerhalb der Mittenbohrung erstreckt.

Bei einer weiteren Verfahrensweise liegt das Markerelement als Schicht vor, die im Bereich des Außenmantels eines zylinderförmigen Bauteils angebracht ist, das sich in der Mittebohrung befindet, wie beispielsweise einem Füllstab aus dem Glas-Füllmaterial.

In den Hohlzylinder werden in üblicher Weise zwei oder mehr, beispielsweise vier bis sieben zusätzliche Längsbohrungen (Kernstab-Bohrungen) eingebracht, deren Längsachsen parallel zur Längsachse der Mittenbohrung verlaufen. Die Kernstab-Bohrungen sind Durchgangsbohrungen oder Sacklochbohrungen und dienen zur Aufnahme von jeweils mindestens einem Kernstab aus dem Kernglas. Die Zusammensetzung des Kernglases ist in radialer Richtung gesehen gleichbleibend homogen oder sie ändert sich graduell oder stufenweise. Sie unterscheidet sich von der des Mantelglases so, dass eine Lichtführung im Kernglasbereich gewährleistet wird.

Die gewünschte Anzahl an Kernstab-Bohrungen wird entweder in einem Arbeitsgang erzeugt und jeweils mit mindestens einem Kernstab belegt. Oder es wird vorab nur eine Kernstab-Bohrung oder nur ein erster Anteil der gewünschten Anzahl an Kernstab-Bohrungen erzeugt, diese jeweils mit mindestens einem Kernstab belegt, und die mit den Kernstäben belegten Kernstab-Bohrungen werden kollabiert (dieser Umformprozess wird hier auch als "Konsolidierung" bezeichnet), bevor in einem zweiten oder weiteren Arbeitsgang der restliche Anteil oder ein weiterer Anteil der Kernstab-Bohrungen erzeugt wird, und auch dieser Anteil jeweils mit mindestens einem Kernstab belegt und gegebenenfalls kollabiert wird. Im einfachsten Fall haben alle Kernstäbe die gleichen Abmessungen und bestehen aus dem gleichen Kernglas. Die Kernstäbe können sich aber auch in ihren Abmessungen und/oder in der Zusammensetzung des jeweiligen Kernglases unterscheiden.

Das Befüllen der Mittenbohrung mit dem Glas-Füllmaterial und dem Markerelement kann erfolgen bevor oder nachdem alle Kernstab-Bohrungen erzeugt und/oder gefüllt worden sind, oder es kann erfolgen bevor oder nachdem ein Teil der Kernstab-Bohrungen erzeugt und/oder gefüllt worden sind. Bei einer bevorzugten Verfahrensweise wird die Mittenbohrung mit dem Glas-Füllmaterial und dem Markerelement befüllt, anschließend wird die befüllte Mittenbohrung durch Erhitzen kollabiert, und erst danach werden die gewünschten Kernstab-Bohrungen erzeugt. Bei einer anderen bevorzugten Verfahrensweise wird ein erster Anteil der gewünschten Anzahl der Kernstab-Bohrungen erzeugt und mit mindestens einem Kernstab bestückt, die Mittenbohrung wird mit dem Glas-Füllmaterial und dem Markerelement befüllt, anschließend werden die befüllten Kernstab-Bohrungen und die befüllte Mittenbohrung durch Erhitzen konsolidiert, und erst danach werden ein zweiter Anteil der Kernstab-Bohrungen erzeugt.

Das so hergestellte Bauteil-Ensemble wird umgeformt und dabei entweder direkt zu der Mehrkernfaser gezogen oder es wird zu einer Vorform für die Mehrkernfaser konsolidiert, wobei das Konsolidieren mit einem gleichzeitigen Elongieren einhergehen kann. Die so erzeugte "konsolidierte Vorform" wird gegebenenfalls zu der Mehrkernfaser gezogen oder sie wird zu einer "sekundären Vorform" weiterverarbeitet. Die Weiterverarbeitung zur "sekundären Vorform" umfasst beispielsweise das Erzeugen weiterer Bohrungen im Mantelglasbereich und deren Belegung mit Kernglas oder mit anderen Gläsern oder die einmalige oder wiederholte Durchführung von einem oder mehreren der folgenden Heißformprozesse: Aufkollabieren von zusätzlichem Mantelmaterial, Kollabieren, Elongieren, Kollabieren und gleichzeitiges Elongieren. Aus der durch die Weiterverarbeitung erzeugten sekundären Vorform wird die Mehrkernfaser gezogen.

Bei einer bevorzugten Verfahrensweise umfasst die Herstellung des Bauteil-Ensembles folgende Verfahrensschritte:
(a) Bereitstellen des Hohlzylinders, der das Mantelglas enthält,
(b) Bereitstellen mehrerer Kernstäbe, die das Kernglas enthalten,
(c) Bereitstellen eines Füllstabs, der eine Füllstab-Längsachse aufweist und der das Glas-Füllmaterial enthält,
(d) Bereitstellen des Markerelements,
(e) Erzeugen von Kernstab-Bohrungen, die sich entlang der Hohlzylinder-Längsachse erstrecken,
(f) Einbringen der Kernstäbe in die Kernstab-Bohrungen, und
(g) Einbringen des Füllstabs und des Markerelements in die Mittenbohrung unter Bildung des Bauteil-Ensembles.

Das so erzeugte Bauteil-Ensemble umfasst den Hohlzylinder, mindestens einen Füllstab, mindestens ein Markerelement und Kernstäbe. Die Listenzeichen (a) bis (g) geben keine Reihenfolge der Verfahrensschritte vor. Als Kernstäbe des Bauteil-Ensemble werden hier auch solche Kernstäbe bezeichnet, wenn diese in ihrer jeweiligen Kernstab-Bohrung bereits eingeschmolzen sind.

Das Markerelement erstreckt sich entlang der Füllstab-Längsachse bevorzugt über dessen gesamte Länge, also vom ersten Füllstab-Ende bis zum zweiten Füllstab-Ende, und es ist vorzugsweise an dem Füllstab angebracht.

Durch das Anbringen am Füllstab profitiert das Markerelement ganz besonders von dessen Geradheit und Ausrichtung; diese Eigenschaften werden quasi auf das Markerelement übertragen. Das Anbringen beruht beispielsweise auf Reibschluss, Stoffschluss und/oder Formschluss zwischen Füllstab und Markerelement.

Das Markerelement wird vorzugsweise in Form eines zylinderförmigen Bauteils aus einem Markermaterial oder in Form einer mit dem Füllstab verbundenen Schicht oder Masse aus dem Markermaterial bereitgestellt.

Das mindestens eine zylinderförmige Bauteil ist beispielsweise ein Rohr und bevorzugt ein Stab. Bei einem Markerelement in Form eines Rohres kann die Rohrwandung ein Material enthalten, das eine höhere Viskosität aufweist als das Mantelglas, so dass beim Faserziehprozess die Bohrung nicht vollständig kollabiert und in der fertigen Mehrkernfaser als Hohlraum ("Airline") erhalten bleibt.

Die Querschnittsgeometrie, gegebenenfalls der Außendurchmesser und die Länge des Füllstabs sind an Geometrie und Länge der Hohlzylinder-Mittenbohrung angepasst. Die Mittenbohrung wird vorzugsweise unter Belassung eines umlaufenden Spalts mit einer Spaltweite von weniger als 2mm, besonders bevorzugt maximal 1mm, gefüllt. Beispielsweise liegt bei einer Mittenbohrung im Bereich von 38mm bis 78mm der Füllstab-Durchmesser im Bereich von 36mm bis 76mm.

Bei einer bevorzugten Verfahrensweise weist der Füllstab eine sich entlang der Füllstab-Längsachse erstreckende Ausnehmung auf, die das Markerelement bildet oder in der das Markerelement angeordnet ist.

Die Ausnehmung ist beispielsweise als Bohrung durch den Füllstab und vorzugsweise als Längsrille (Längsnut) an der Außenmantelfläche des Füllstabs ausgeführt. Die rillenförmige Ausnehmung ist beispielsweise mit einem zylinderförmigen Bauteil aus einem Markermaterial oder mit einem partikelförmigen Markermaterial gefüllt. Das partikelförmige Markermaterial kann durch thermische Verdichtung oder durch Hinzufügen von Bindemittel eine gewisse Formstabilität haben. Das Markermaterial füllt die Ausnehmung vollständig oder teilweise aus. Dabei gewährleistet die Ausnehmung einen Formschluss zwischen Markerelement und Füllstab. Markerelement und Füllstab können auch vorab (das heißt: vor dem Einbringen in die Mittenbohrung) durch Stoffschluss miteinander verbunden werden, beispielsweise durch Zusammensintern oder Verschmelzen.

Besonders bevorzugt ist in dem Zusammenhang diejenige Verfahrensweise, bei der ein Füllstab mit einer Längsrille versehen wird. Denn zum einen ist eine Längsrille in der Füllstab-Außenmantelfläche im Vergleich zu einer Bohrung im Glas-Füllmaterial besonders einfach und geometrisch exakt zu fertigen; beispielsweise durch Fräsen mittels mechanischem Fräser oder durch Laserablation. Zum anderen ist die so erzeugte Längsrille genauso so exakt und gerade wie der Füllstab selbst. Und darüber hinaus können die Tiefe beziehungsweise die Öffnungsweite der Längsrille fast beliebig klein gehalten werden; beispielsweise beides weniger als 15mm, vorzugsweise weniger als 10mm und besonders bevorzugt weniger als 5mm. Die Längsrille kann als Wandung eines luftgefüllten Hohlkanals umgeformt werden, der als Markerelement dienen kann, beziehungsweise kann die Längsrille mit einem Markermaterial gefüllt werden. Somit sind auf einfache Weise geometrisch exakte Markerelemente mit geringem Volumen herstellbar, die in der Vorform beziehungsweise im Bauteil-Ensemble eine Abweichung ihrer axialen Ausrichtung von weniger als 0,3mm/m haben und die demgemäß in der Mehrkernfaser entsprechend kleine und hochgenaue Markerzonen ausbilden. Das Füllen der Längsrille mit dem Markermaterial erfolgt beispielsweise durch Einlegen eines zylinderförmigen Bauteils (Stab oder Rohr) aus dem Markermaterial oder durch Einbringen einer Schüttung von Teilchen aus dem Markermaterial oder durch Innenbeschichtung der Längsrille mit dem Markermaterial. Das zylinderförmige Bauteil beziehungsweise die Schüttung aus dem Markermaterial kann in der Längsrille zusätzlich durch Verschmelzen fixiert werden.

Das Markerelement bildet einen luftgefüllten, langgestreckten Hohlraum (Kanal) oder es enthält ein Markermaterial, das sich vorzugsweise in mindestens einer physikalischen und/oder chemischen Eigenschaft vom Mantelglas, und vom Glas-Füllmaterial unterscheidet, wobei die Eigenschaft vorzugsweise ausgewählt ist aus: Brechungsindex, Farbe, Fluoreszenz und/oder spezifischer Glasdichte.

Die Eigenschaft (beziehungsweise die Eigenschaften), die das Markerelement von den Gläsern des Bauteil-Ensembles unterscheidet, wirkt sich insbesondere auf die optischvisuelle Erscheinung des Markerelements aus und ist vorzugsweise mittels eines optischen Sensors erfassbar. Die Glaszusammensetzung eines Markerglases kann - so wie beispielsweise auch das Glas-Füllmaterial - auf Quarzglas basieren. Durch Dotierung kann der Brechungsindex von Quarzglas verändert werden. So bewirkt beispielsweise die Dotierung eines Marker-Quarzglases mit Fluor eine Absenkung des Brechungsindex gegenüber undotiertem Quarzglas. Eine Einlagerung von Kohlenstoff in das Marker-Quarzglas kann zu einer Schwarzfärbung führen. Eine Dotierung des Marker-Quarzglases mit Titan bewirkt je nach Oxidationszustand eine Grau-Blaufärbung. Eine Dotierung des Marker-Quarzglases mit Seltenerdmetallen oder Germaniumoxid äußert sich in einer Fluoreszenz bei Dotierstoff-spezifischen Wellenlängen. Die spezifische Glasdichte des Markerelements ist durch Poren veränderbar und äußert sich in einer Verringerung der optischen Transparenz gegenüber blasenfreiem Glas.

Hinsichtlich des Halbzeugs zur Herstellung einer Mehrkernfaser wird die oben angegebene technische Aufgabe ausgehend von dem eingangs genannten Halbzeug erfindungsgemäß dadurch gelöst, dass an das Glas-Füllmaterial ein Markerelement aus Markerglas angrenzt, das sich entlang der Mittenbohrung-Längsachse erstreckt.

Das erfindungsgemäße Halbzeug dient zur Herstellung einer Mehrkernfaser ohne zentralen Signalkern. Es umfasst einen Hohlzylinder, der einen Mantelglasbereich aus Mantelglas und mehrere mit einem Kernglas belegte Kernglasbereiche aufweist. Die Hohlzylinder-Mittenbohrung ist vollständig oder mindestens teilweise von einem Glas-Füllmaterial belegt, an das ein Markerelement angrenzt.

Die Anzahl der Kernglasbereiche beträgt mindestens zwei, bevorzugt sind es vier bis sieben. Sie sind beispielsweise jeweils als parallel zur Hohlzylinder-Längsachse verlaufende Kernstab-Bohrungen im Mantelglasbereich des Hohlzylinders ausgeführt, und mit jeweils einem Kernstab besetzt. Das Glas-Füllmaterial liegt beispielsweise als mindestens ein Füllstab vor, der in die Hohlzylinder-Mittenbohrung eingesetzt ist und diese mindestens teilweise ausfüllt. In der Hohlzylinder-Mittenbohrung befindet sich außerdem mindestens ein Markerelement, das an das Glas-Füllmaterial angrenzt. Das Glas-Füllmaterial enthält keinen für die Signalübertragung geeigneten Kernbereich.

Das Halbzeug bildet ein Bauteil-Ensemble wenn alle oder einige Kernstäbe, Füllstäbe und Markerelemente in ihren jeweiligen Bohrungen lediglich eingesetzt, aber noch nicht darin verschmolzen sind. Das Halbzeug bildet eine Vorform (auch als "konsolidierte Vorform" bezeichnet), wenn alle Bohrungen kollabiert und die Kernstäbe, Füllstäbe und Markerelemente untereinander oder mit dem Hohlzylinder verschmolzen sind.

Der Mantelglas-Hohlzylinder weist eine zentrale Mittenbohrung auf. Derartige Hohlzylinder werden beispielsweise kostengünstig anhand des OVD-Verfahrens erhalten, nachdem der Abscheidedorn entfernt worden ist. Die zentrale Mittenbohrung ist vollständig oder teilweise mittels eines Glas-Füllmaterials verschlossen, das beispielsweise mehrere Füllstäbe oder vorzugsweise einen einzigen Füllstab umfasst, der das Glas-Füllmaterial enthält.

Bei Ausführungsformen, bei denen die chemische Zusammensetzung des Glas-Füllmaterials derjenigen des Mantelglases entspricht, bildet das Glas-Füllmaterial in der Mehrkernfaser einen Teil des optischen Mantels. Bei Ausführungsformen, bei denen sich die chemischen Zusammensetzungen von Glas-Füllmaterial und Mantelglas unterscheiden, kann dem Glas-Füllmaterial in der Mehrkernfaser eine zusätzliche Funktion zufallen, beispielsweise kann es als "Stresszone" wirken, die in radialer Richtung wirkende Druck- oder Zugspannungen innerhalb der Faser erzeugt und/oder kompensiert.

Die zentrale Mittenbohrung wird dafür genutzt, um zusätzlich zum Glas-Füllmaterial ein Markerelement Markerglas aufzunehmen. Das Markerelement liegt im Halbzeug beispielsweise als langgestreckter Hohlraum oder als konsolidiertes oder nichtkonsolidiertes Bauteil aus einem Markermaterial oder als Beschichtung eines derartigen Bauteils mit dem Markermaterial vor und bildet in der Mehrkernfaser eine durchgängige, linienartige Markerzone aus dem Markermaterial oder einen luftgefüllten Hohlkanal. Das Markerelement wird im oder am Glas-Füllmaterial angeordnet. Es befindet sich beispielsweise in einem Hohlkanal, der sich durch das Glas-Füllmaterial entlang der Hohlzylinder-Längsachse erstreckt, oder es ist am Außenmantel eines zylinderförmigen Glas-Füllmaterials angebracht.

Da sich das Markerelement im oder am Glas-Füllmaterial und damit innerhalb der Mittenbohrung des Mantelglas-Hohlzylinders aber nicht im Mantelglas des Hohlzylinders befindet, entfällt die Notwendigkeit dafür, den Mantelglas-Hohlzylinder zwecks Einfügung des Markerelements anzupassen, beispielsweise durch eine mechanische Bearbeitung und insbesondere durch Erzeugung einer separaten Bohrung für die Aufnahme des Markerelements im Mantelglas-Hohlzylinder. Das mit einer derartigen Anpassung des Mantelglas-Hohlzylinders einhergehende Beschädigungsrisiko entfällt somit.

Die Maßhaltigkeit und die Geradheit der Mittenbohrung können durch das OVD-Herstellungsverfahren selbst und - sofern erforderlich - durch nachfolgende Maßnahmen einfach gewährleistet werden. Zu den für die Einstellung von Maßhaltigkeit und Geradheit geeigneten nachfolgenden Maßnahmen gehören beispielsweise eine mechanische Nachbearbeitung der Mittenbohrung und/oder ein Elongierprozess, dem der im OVD-Abscheideprozess erzeugte Ausgangs-Hohlzylinder unterzogen wird, um daraus einen Rohrstrang zu elongieren, aus dem der Mantelglas-Hohlzylinder erzeugt wird oder aus dem mehrere Mantelglas-Hohlzylinder abgelängt werden. Der Elongierprozess erfolgt vorzugsweise ohne Einsatz eines Formwerkzeugs, das am abgezogenen Rohrstrangs angreift, um Beschädigungen der Rohrstrang-Oberfläche zu vermeiden. Ebenso können die Maßhaltigkeit und die Geradheit eines das Glas-Füllmaterial enthaltenden und passgenau in die Mittenbohrung einzusetzenden Zylinders; insbesondere eines Füllstabs, durch mechanische Bearbeitung und/oder mittels eines derartigen Elongierprozesses vergleichsweise einfach gewährleistet werden. Diese mechanische Bearbeitung kann gegebenenfalls ein Außenbearbeitungsverfahren sein, was in der Regel deutlich weniger aufwändig ist als ein Innenbearbeitungsverfahren.

Eine achsenparallele Ausrichtung des Markerelements wird dadurch erleichtert, indem es an das Glas-Füllmaterial angrenzt.

Die vergleichsweise einfach zu erreichende Geradheit von Glas-Füllmaterial und Mittenbohrung erleichtern auch die achsenparallele Ausrichtung des Markerelements. Dies gilt insbesondere für eine besonders bevorzugte Verfahrensweise bei der das Markerelement zwischen dem Glas-Füllmaterial und dem Mantelglasbereich angeordnet wird.

Somit ist das Halbzeug mit einem Markerelement ausgestattet, für das keine separate Bohrung im Mantelglas-Hohlzylinder - verbunden mit den oben erläuterten Risiken und Schwierigkeiten - erzeugt werden musste. Gleichzeitig kann trotz hohem Aspektverhältnis eine hohe Genauigkeit gewährleistet werden, die sich beispielsweise im Halbzeug darin manifestiert, dass die Achsenparallelität des Markerelements eine Abweichung von weniger als 0,3mm/m hat.

Bei einer bevorzugten Ausführungsform umfasst das erfindungsgemäße Halbzeug weiterhin: den die Mittenbohrung aufweisenden Hohlzylinder, mindestens zwei Kernstäbe, die das Kernglas enthalten und die Kernglasbereiche bilden, mindestens einen in der Mittenbohrung angeordneten Füllstab, der eine Füllstab-Längsachse aufweist und der das Glas-Füllmaterial enthält, und mindestens ein in der Mittenbohrung und angrenzend an den Füllstab angeordnetes Markerelement.

Das Markerelement liegt beispielsweise als Stab vor, der sich parallel zu einem Füllstab oder zu mehreren Füllstäben innerhalb der Mittenbohrung erstreckt. Markerelement-Stab und Füllstäbe können gegebenenfalls auch in konsolidierter, also mit ihrer Umgebung verschmolzener Form vorliegen.

Bei einer weiteren Ausführungsform liegt das Markerelement als Schicht aus einem Markermaterial vor, die im Bereich des Außenmantels eines zylinderförmigen Bauteils angebracht ist, das sich in der Mittenbohrung befindet, wie beispielsweise einem Füllstab aus dem Glas-Füllmaterial. Auch hier können die Markerelement-Schicht und die zylinderförmigen Bauteile beziehungsweise Füllstäbe gegebenenfalls auch in konsolidierter, also mit ihrer Umgebung verschmolzener Form vorliegen.

In den Hohlzylinder sind zwei oder mehr, beispielsweise vier bis sieben zusätzliche Längsbohrungen (Kernstab-Bohrungen) eingebracht, deren Längsachsen parallel zur Längsachse der Mittenbohrung verlaufen. Die Kernstab-Bohrungen sind Durchgangsbohrungen oder Sacklochbohrungen und dienen zur Aufnahme von jeweils mindestens einem Kernstab aus dem Kernglas. Die Zusammensetzung des Kernglases ist in radialer Richtung gesehen gleichbleibend homogen oder sie ändert sich graduell oder stufenweise. Sie unterscheidet sich von der des Mantelglases so, dass eine Lichtführung im Kernglasbereich gewährleistet wird. Im einfachsten Fall haben alle Kernstäbe die gleichen Abmessungen und bestehen aus dem gleichen Kernglas. Die Kernstäbe können sich aber auch in ihren Abmessungen und/oder in der Zusammensetzung des jeweiligen Kernglases unterscheiden.

Das Halbzeug wird entweder direkt zu der Mehrkernfaser gezogen oder es wird zu einer Vorform für die Mehrkernfaser konsolidiert, wobei das Konsolidieren mit einem gleichzeitigen Elongieren einhergehen kann. Die so erzeugte "konsolidierte Vorform" wird gegebenenfalls zu der Mehrkernfaser gezogen oder sie wird zu einer "sekundären Vorform" weiterverarbeitet, aus der dann abschließend die MFK gezogen wird.

Das Markerelement erstreckt sich entlang der Füllstab-Längsachse bevorzugt über dessen gesamte Länge, also vom ersten Füllstab-Ende bis zum zweiten Füllstab-Ende, und es ist vorzugsweise an dem Füllstab angebracht.

Durch das Anbringen am Füllstab profitiert das Markerelement von dessen Geradheit und Ausrichtung; diese Eigenschaften werden quasi auf das Markerelement übertragen. Das Anbringen beruht beispielsweise auf Reibschluss, Stoffschluss und/oder Formschluss zwischen Füllstab und Markerelement.

Das Markerelement ist vorzugsweise in Form eines zylinderförmigen Bauteils aus einem Markermaterial oder in Form einer mit dem Füllstab verbundenen Schicht oder Masse aus dem Markermaterial ausgebildet. Das mindestens eine zylinderförmige Bauteil ist beispielsweise ein Rohr und bevorzugt ein Stab. Bei einem Markerelement in Form eines Rohres kann die Rohrwandung ein Material enthalten, das eine höhere Viskosität aufweist als das Mantelglas, so dass beim Faserziehprozess die Bohrung nicht vollständig kollabiert und in der fertigen Mehrkernfaser als Hohlraum ("Airline") erhalten bleibt.

Die Querschnittsgeometrie, gegebenenfalls der Außendurchmesser und die Länge des Füllstabs sind an Geometrie und Länge der Hohlzylinder-Mittenbohrung angepasst. Die Mittenbohrung wird vorzugsweise unter Belassung eines umlaufenden Spalts mit einer Spaltweite von weniger als 2mm, besonders bevorzugt maximal 1mm, gefüllt. Beispielsweise liegt bei einer Mittenbohrung im Bereich von 38mm bis 78mm der Füllstab-Durchmesser im Bereich von 36mm bis 76mm.

Bei einer bevorzugten Ausführungsform weist der Füllstab eine sich entlang der Füllstab-Längsachse erstreckende Ausnehmung auf, die das Markerelement bildet oder in der das Markerelement angeordnet ist.

Die Ausnehmung ist vorzugsweise als Bohrung durch den Füllstab oder als Längsrille (Längsnut) an der Außenmantelfläche des Füllstabs ausgeführt. Sie bildet die Umrandung eines Markerelements in Form eines langgestreckten, luftgefüllten Hohlraums, oder sie ist beispielsweise mit einem zylinderförmigen Bauteil aus einem Markermaterial oder mit einem partikelförmigen Markermaterial gefüllt. Das partikelförmige Markermaterial kann durch Teilverdichtung oder Hinzufügen von Bindemittel eine gewisse Formstabilität haben. Das Markermaterial füllt die Ausnehmung vollständig oder teilweise aus. Dabei gewährleistet die Ausnehmung einen Formschluss zwischen Markerelement und Füllstab. Markerelement und Füllstab können auch vorab (das heißt: vor dem Einbringen in die Mittenbohrung) durch Stoffschluss miteinander verbunden werden, beispielsweise durch Zusammensintern oder Verschmelzen.

Besonders bevorzugt ist in dem Zusammenhang diejenige Ausführungsform, bei der ein Füllstab mit einer Längsrille versehen wird. Denn zum einen ist eine Längsrille in der Füllstab-Außenmantelfläche im Vergleich zu einer Bohrung in das Glas-Füllmaterial besonders einfach zu fertigen; beispielsweise durch Fräsen mittels mechanischem Fräser oder durch Laserablation. Zum anderen ist die so erzeugte Längsrille genauso so exakt und gerade wie der Füllstab selbst. Und darüber hinaus können die Tiefe beziehungsweise die Öffnungsweite der Längsrille fast beliebig klein gehalten werden; beispielsweise beides weniger als 15mm, vorzugsweise weniger als 10mm und besonders bevorzugt weniger als 5mm. Durch Nutzung der Längsrille als Wandung eines luftgefüllten Hohlkanals, der als Markerelement dient, beziehungsweise durch Füllen der Längsrille mit einem Markermaterial sind somit auf einfache Weise geometrisch exakte Markerelemente mit geringem Volumen herstellbar, die in der Vorform beziehungsweise im Bauteil-Ensemble eine Abweichung ihrer axialen Ausrichtung von weniger als 0,3mm/m haben und die demgemäß in der Mehrkernfaser entsprechend kleine und hochgenaue Markerzonen ausbilden. Das Füllen der Längsrille mit dem Markermaterial erfolgt beispielsweise durch Einlegen eines zylinderförmigen Bauteils (Stab oder Rohr) aus dem Markermaterial oder durch Einbringen einer Schüttung von Teilchen aus dem Markermaterial oder durch Innenbeschichtung der Längsrille mit dem Markermaterial. Das zylinderförmige Bauteil beziehungsweise die Schüttung aus dem Markermaterial kann in der Längsrille zusätzlich durch Verschmelzen fixiert werden.

Das Markerelement bildet einen luftgefüllten, langgestreckten Hohlraum (Kanal) oder Kanal oder es enthält ein Markermaterial, das sich vorzugsweise in mindestens einer physikalischen und/oder chemischen Eigenschaft vom Mantelglas und vom Glas-Füllmaterial unterscheidet, wobei die Eigenschaft ausgewählt ist aus: Brechungsindex, Farbe, Fluoreszenz und/oder spezifischer Glasdichte.

Die Eigenschaft (beziehungsweise die Eigenschaften), die das Markerelement von den Gläsern des Bauteil-Ensembles unterscheidet, wirkt sich insbesondere auf die optischvisuelle Erscheinung des Markerelements aus und ist vorzugsweise mittels eines optischen Sensors erfassbar. Die Glaszusammensetzung des eines Markerglases kann - so wie beispielsweise auch das Glas-Füllmaterial - auf Quarzglas basieren. Durch Dotierung kann der Brechungsindex von Quarzglas verändert werden. So bewirkt beispielsweise die Dotierung des Marker-Quarzglases mit Fluor eine Absenkung des Brechungsindex gegenüber undotiertem Quarzglas. Eine Einlagerung von Kohlenstoff in das Marker-Quarzglas kann zu einer Schwarzfärbung führen. Eine Dotierung des Marker-Quarzglases mit Titan bewirkt je nach Oxidationszustand eine Grau-Blaufärbung. Eine Dotierung des Marker-Quarzglases mit Seltenerdmetallen oder Germaniumoxid äußert sich in einer Fluoreszenz bei Dotierstoff-spezifischen Wellenlängen. Die spezifische Glasdichte des Markerelements ist durch Poren veränderbar und äußert sich in einer Verringerung der optischen Transparenz gegenüber blasenfreiem Glas.

Anhand des erfindungsgemäßen Verfahrens beziehungsweise unter Einsatz des erfindungsgemäßen Halbzeugs wird eine Mehrkernfaser erhalten, bei der die Signalkerne außerhalb eines Hüllkreises um die Faser-Mittelachse und die Markerzone innerhalb des Hüllkreises um die Faser-Mittelachse angeordnet sind.

Der Typ der Mehrkernfaser entspricht dem der "Mehrkernfaser ohne zentralen Signalkern". Alle Signalkerne sind außerhalb der Faser-Mittelachse und vollständig außerhalb eines Hüllkreises um die Faser-Mittelachse angeordnet.

Die Mehrkernfaser ist von mindestens einer durchgängigen, linienartigen Markerzone durchzogen. Die Markerzone dient zur Symmetriebrechung sowie dazu, die Signalkerne sowie deren Positionen zueinander und in Bezug auf die Faser-Mittelachse eindeutig zu identifizieren.

Im Faser-Querschnitt gesehen liegt die - vorzugsweise einzige - Markerzone innerhalb des genannten, von den Signalkernen definierten Hüllkreises, und damit in einem Bereich zwischen den Signalkernen (und nicht: außerhalb der Signalkerne), der auch die Faser-Mittelachse umfasst. Es hat sich überraschend gezeigt, dass der Mehrkernfaser bei dieser Positionierung der Markerzone beim Faserziehprozess ein vergleichsweise geringes Faser-Curl aufgeprägt wird. Ohne auf diese Theorie festgelegt sein zu wollen, kann vermutet werden, dass die Positionierung der Markerzone im Innenbereich des Faserquerschnitts weniger Einfluss auf die Symmetrie des Faserdesigns ausübt als eine Positionierung im Außenbereich. Offenbar werden dadurch beim Faserziehprozess geringere radial wirkende Kräfte in der Mehrkernfaser erzeugt.

### Definitionen und Messmethoden

Einzelne Begriffe der obigen Beschreibung werden im Folgenden ergänzend definiert. Die Definitionen sind Bestandteil der Beschreibung der Erfindung. Für Begriffe und Messverfahren, die in der Beschreibung nicht speziell definiert sind, ist die Auslegung gemäß der Internationalen Fernmeldeunion (ITU; International Telecommunication Union) maßgeblich. Bei einem Widerspruch zwischen einer der folgenden Definitionen und der übrigen Beschreibung ist das in der übrigen Beschreibung Gesagte maßgeblich.

### Mantelglas-Hohlzylinder / Mantelglasbereich

Der Hohlzylinder enthält ein Mantelglas. Das Mantelglas bildet einen Mantelglasbereich mit zentraler Mittenbohrung, außerhalb von der die zur Signalübertragung ausgelegten Kernglasbereiche erzeugt werden. Das Mantelglas besteht beispielsweise aus undotiertem Quarzglas oder es enthält mindestens einen den Brechungsindex von Quarzglas absenkenden Dotierstoff. Fluor und Bor sind Dotierstoffe, die den Brechungsindex von Quarzglas absenken können. Der Mantelglas-Hohlzylinder ist langgestreckt und hat im Wesentlichen Zylinderform. Im Bereich der stirnseitigen Enden können Abweichungen von der Zylinderform vorhanden sein. Der Mantelglas-Zylinder wird vorzugsweise anhand des OVD-Verfahrens hergestellt.

### Kernstäbe / Kernglasbereich

Die Kernstäbe enthalten ein Kernglas, das in radialer Richtung einen homogenen oder einen nicht-homogenen Brechungsindex-Verlauf aufweist. Das Kernglas von jedem der Kernstäbe bildet einen Kernglasbereich. Die Kernstäbe können einen Bereich aus einem Kernglas mit einem vergleichsweise hohen Brechungsindex und mindestens einen weiteren Bereich aus einem anderen Glas mit einem vergleichsweise niedrigen Brechungsindex enthalten; beispielsweise ein Quarzglas, das mit Fluor und/oder Chlor dotiert ist. Das Glas mit dem höchsten Brechungsindex befindet sich in der Regel in der zentralen Achse des Kernstabs. Es besteht beispielsweise aus Quarzglas, dem mindestens ein Dotierstoff zur Erhöhung des Brechungsindex zugesetzt ist. In der Mehrkernfaser bildet der Kernstab mindestens einen Signalkern aus, in dem das zu übertragende Signal hauptsächlich transportiert wird. Der Signalkern kann an andere Glasbereiche mit kleinerem Brechungsindex angrenzen, die ebenfalls vom Kernstab bereitgestellt worden sind.

### Füllstab

Der Füllstab enthält ein Glas-Füllmaterial. Das Glas-Füllmaterial bildet in der Mehrkernfaser keinen für die Signalübertragung nutzbaren Signalkern. Die Zusammensetzung des Glas-Füllmaterials entspricht im einfachsten Fall dem des Mantelglases. Die Zusammensetzung kann aber auch von des Mantelglases abweichen, um der Mehrkernfaser eine zusätzliche Eigenschaft aufzuprägen. Beispielsweise kann es einen geringeren thermischen Ausdehnungskoeffizienten als das Mantelglas aufweisen.

### Markerelement / Markermaterial / Markerglas

Das Markerelement enthält Luft und/oder ein Markermaterial; insbesondere mindestens ein Markerglas. Die chemische Zusammensetzung des Markermaterials unterscheidet sich von der des Mantelglases und des Glas-Füllmaterials und/oder die Dichte des Markermaterials unterscheidet sich von der des Mantelglases und des Glas-Füllmaterials. Das Markerelement liegt in der Vorform und im Bauteil-Ensemble als Bauteil oder als Schicht oder Masse auf einem Bauteil vor und bildet in der Mehrkernfaser eine optisch detektierbare Markerzone.

### Bauteil-Ensemble / konsolidierte Vorform / sekundäre Vorform / Halbzeug

Das "Bauteil-Ensemble" umfasst den Mantelglas-Hohlzylinder mit darin eingesetzten Kernstäben, den mindestens einen Füllstab und das mindestens eine Markerelement. Durch Fixieren der Kernstäbe in den Kernstab-Bohrungen; beispielsweise durch Verengung eines Mantelglas-Hohlzylinder-Endes oder durch Kollabieren und Verschmelzen, wird eine "Vorform" erhalten, die hier auch als "konsolidierte Vorform" bezeichnet wird. Das Bauteil-Ensemble oder die (konsolidierte) Vorform werden zu einer "sekundären Vorform" oder direkt zu der Mehrkernfaser elongiert. Unter dem Begriff "Halbzeug" werden hier das Bauteil-Ensemble, die konsolidierte Vorform und die sekundäre Vorform subsumiert.

### Quarzglas

Quarzglas ist beispielsweise aus natürlich vorkommendem SiO₂-Rohstoff erschmolzen (natürliches Quarzglas), oder es ist synthetisch erzeugt (synthetisches Quarzglas) oder es besteht aus Mischungen dieser Quarzglassorten. Synthetisches, transparentes Quarzglas wird beispielsweise durch Flammenhydrolyse oder Oxidation synthetisch erzeugter Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten.

### Verschmelzen

Im Zusammenhang mit Bauteilen aus Glas ist unter Verschmelzen zu verstehen, dass die Bauteile an einer Kontaktfläche miteinander verschmolzen sind. Das Verschmelzen erfolgt durch Aufheizen der Bauteile mindestens im Bereich der Kontaktfläche mittels einer Heizquelle, wie einem Ofen, einem Brenner oder einem Laser.

### Positionsangaben: oben / unten

Die Angaben beziehen sich auf Positionen beim Elongierprozess beziehungsweise beim Faserziehprozess. "Unten" bezeichnet die Position in Ziehrichtung, "Oben" die Position entgegen der Ziehrichtung.

### Querschnitt

Den Schnitt senkrecht zur Längsrichtung/Längsachse.

### Längsschnitt

Einen Schnitt parallel zur Längsrichtung/Längsachse.

### Bohrung

Die Begriffe "Bohrung", "Mittenbohrung", "Innenbohrung" oder "Längsbohrung" bezeichnen Löcher mit zylinderförmiger aber ansonsten beliebiger Innengeometrie. Sie werden beispielsweise durch einen Bohrvorgang erzeugt oder sie entstehen, indem durch einen Abscheideprozess oder einen Pressvorgang auf der Außenmantelfläche eines Dorns eine Materialschicht abgelagert wird und der Dorn anschließend entnommen wird.

### Achsenparallele Ausrichtung / Achsenparallelität

Bezugsachse ist jeweils die Längsachse des Mantelglas-Hohlzylinders beziehungsweise die Mittelachse der Mehrkernfaser.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: einen Querschnitt eines Mantelglas-Hohlzylinders mit einer Mittelbohrung sowie Durchgangsbohrungen für die Aufnahme von Kernstäben,
- **Figur 2**: Bearbeitungsschritte (a) bis (d) für die Herstellung eines Füllstabs mit Markerelement zum Einsetzen in die Mittenbohrung des Mantelglas-Hohlzylinders von Figur 1,
- **Figur 3**: das Bauteil-Ensemble aus Mantelglas-Hohlzylinder und eingesetztem Füllstab inklusive Markerelement,
- **Figur 4**: einen Querschnitt einer konsolidierten Vorform aus Mantelglas-Hohlzylinder, eingesetztem Füllstab inklusive Markerelement und in die Durchgangsbohrungen eingesetzten Kernstäben und
- **Figur 5**: einen Querschnitt einer aus der Vorform von Figur 4 gezogenen Mehrkernfaser.

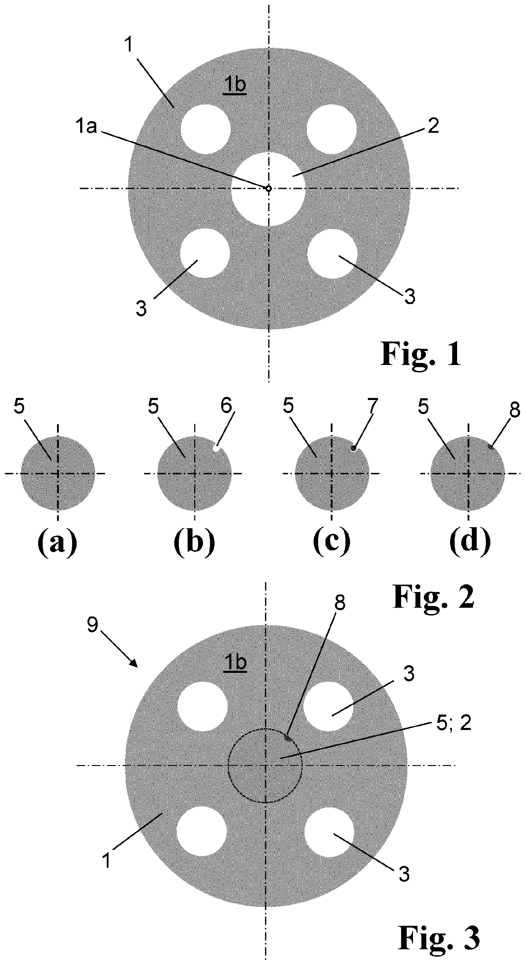

**Figur 1** zeigt schematisch einen Querschnitt eines Hohlzylinders 1 aus einem Mantelglas, der als Basiskörper für die Herstellung einer Mehrkernfaser dient.

Der Hohlzylinder 1 wird in bekannter Weise anhand der OVD-Methode hergestellt. Bei diesem Verfahren werden SiO₂-Sootpartikel gebildet, indem ein hochreines SiO₂-Ausgangsmaterial, beispielsweise Siliciumtetrachlorid, durch einen Abscheidebrenner geleitet und einer Brennerflamme zugeführt wird, in der es zu festem SiO₂ oxidiert wird. Dieses wird in Form feiner SiO₂-Sootpartikel auf der Außenmantelfläche eines um seine Längsachse rotierenden, zylinderförmigen Abscheidedorns aus der Gasphase abgeschieden, wobei der Abscheidebrenner eine reversierende Hin- und Herbewegung entlang der Abscheidedorn-Längsachse ausführt. Auf der Außenmantelfläche des Abscheidedorns bildet sich ein SiO₂-Sootkörper. Nach Abschluss des Abscheideprozesses wird der Abscheidedorn entfernt, so dass eine Innenbohrung 2 zurückbleibt. Der SiO₂-Sootkörper wird anschließend in einem Ofen unter Vakuum verglast.

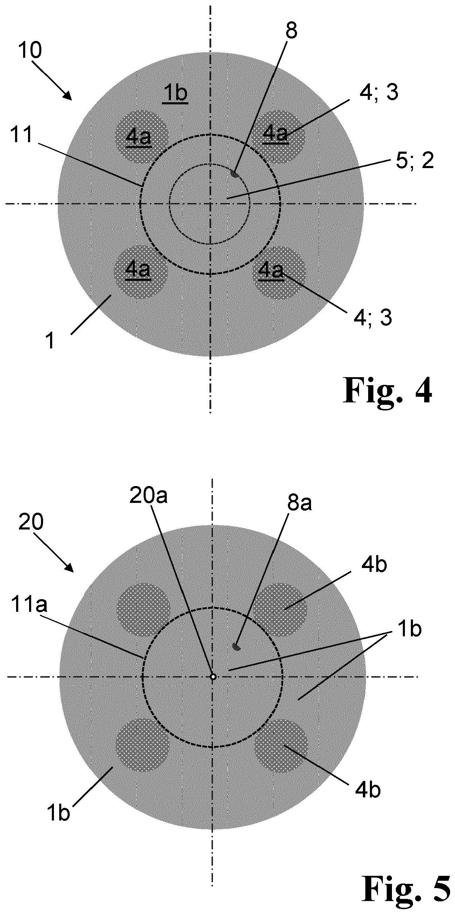

Der so erhaltene Hohlzylinder 1 besteht aus nicht dotiertem, synthetisch erzeugtem Quarzglas, das den Mantelglasbereich 1b bildet. Der Hohlzylinder hat eine Länge von 1500mm und wird durch Rundschleifen auf einen nominalen Außendurchmesser von 200mm und einen Innendurchmesser von 42mm eingestellt. Vier Bohrungen 3 werden in einer vorbestimmten (hier quadratischen) Konfiguration durch mechanisches Bohren in Richtung der Hohlzylinder-Längsachse 1a erzeugt, die in der Darstellung von Figur 1 senkrecht zur Blattebene verläuft. Die Bohrungen 3 dienen zur Aufnahme von Kernstäben (Figur 4) und haben einen Durchmesser von 30mm. Die Bohrungen erstrecken sich durch den gesamten Hohlzylinder 1 (Durchgangsbohrungen). Bei einer alternativen Ausführungsform sind die Bohrungen als Sacklochbohrungen ausgeführt.

**Figur 2** zeigt schematisch Verfahrensschritte zur Herstellung eines Füllstabs 5. Der in **Figur 2(a)** gezeigte Füllstab 5 besteht vorzugsweise aus dem gleichen Glas wie der Hohlzylinder 1, also aus undotiertem Quarzglas. Für seine Herstellung sind die bekannten Methoden geeignet, wie beispielsweise VAD-Verfahren (Vapor Phase Axial Deposition), OVD-Verfahren (Outside Vapor Deposition) oder MCVD-Verfahren (Modified Chemical Vapor Deposition). Er dient zur Füllung der Hohlzylinder-Innenbohrung 2 und hat eine Länge von etwa 1500mm und einen anfänglichen Außendurchmesser von etwa 45mm, der durch Rundschleifen auf etwa 40mm reduziert wird. Durch das Rundschleifen werden etwaige Störungen der Außenmantelfläche und Biegungen beseitigt. Alternativ oder ergänzend wird die Durchmesseranpassung und Oberflächenverbesserung durch Elongieren in einem werkzeugfreien Elongierprozess erreicht.

**Figur 2(b)** zeigt, dass in die Außenmantelfläche des Füllstabes 5 eine Längsnut 6 eingefräst worden ist. Die Längsnut 6 erstreckt sich über die gesamte Länge des Füllstabes 5. Sie hat U-Form mit einem abgerundeten Boden und geraden Seitenwänden. Ihre Öffnungsweite und die Tiefe betragen jeweils 6mm. Aus der Längsnut (6) kann in einem nachfolgenden Verfahrensschritt ein Hohlkanal erzeugt werden, der ein Markerelement im Sinne der Erfindung bildet. Dies wir weiter unten anhand Figur 4 noch näher erläutert.

**Figur 2(c)** zeigt die Längsnut 6 mit einem darin eingelegtem Markerstab 7. Der Markerstab 7 hat einen Durchmesser von 5mm. Es besteht aus synthetisch erzeugtem Quarzglas, das mit Fluor dotiert ist und im Handel unter der Bezeichnung F320 erhältlich ist. Sowohl die Viskosität als auch der Brechungsindex des Fluor-dotierten Quarzglases des Markerstabs 7 sind kleiner als beim undotierten Quarzglas, aus dem der Hohlzylinder 1 und der Füllstab 5 bestehen. Der Markerstab 7 wird erhalten, indem ein Ausgangszylinder aus dem F320-Quarzglas in einem werkzeugfreien Verfahren elongiert wird. Er hat eine glatte und im Schmelzfluss erzeugte Oberfläche und zeichnet sich durch eine hohe Maßhaltigkeit und Geradheit aus, so dass er sich ohne Schwierigkeiten und passgenau in die enge Längsnut 6 einlegen lässt.

Der in die Längsnut 6 eingelegte Markerstab 7 wird mittels eines Brenners erhitzt, so dass sich das Fluor-dotierte Quarzglas infolge seiner vergleichsweise geringen Viskosität erweicht und verformt. **Figur 2(d)** zeigt das die daraus resultierende Markerglasmasse 8 nach dem Erweichen, Verformen und Verschmelzen mit dem Füllstab 5. Das Glasvolumen des ehemaligen Markerstabs 7 ist auf das Innenvorlumen der Längsnut 6 so abgestimmt, dass die Markerglasmasse 8 die Längsnut 6 gerade vollständig ausfüllt.

Der so mit der Markerglasmasse 8 gefüllte Füllstab 5 wird in die Innenbohrung 2 des Hohlzylinders 1 eingesetzt. **Figur 3** zeigt schematisch das Bauteil-Ensemble 9 aus Hohlzylinder 1, Füllstab 5 und Markerglasmasse 8.

Außerdem werden vier Kernstäbe 4 aus Germanium-dotiertem Quarzglas mit einer Länge von etwa 1500mm und einem Außendurchmesser von etwa 28mm hergestellt. Dafür sind ebenfalls bekannte Techniken geeignet, beispielsweise das MCVD-Verfahren (Modified Chemical Vapor Deposition).

Die Kernstäbe 4 werden in die Bohrungen 3 eingesetzt. Anschließend wird das Bauteil-Ensemble 9 aus Mantelglas-Hohlzylinder 1, Füllstab 5 und den Kernstäben 4 erhitzt, so dass sich die Innenbohrung 2 und die Ringspalte um die Kernstäbe 4 schließen und alle Bauteile des Ensembles 9 miteinander verschmolzen werden.

**Figur 4** zeigt schematisch, das so fixierte Bauteil-Ensemble aus Mantelglas-Hohlzylinder 1, Füllstab 5 und den Kernstäben 4, das die konsolidierte Vorform 10 bildet. Alle Kernstäbe 4 bilden voneinander separierte, kreisförmige Kernglasbereiche 4a, die sich vollständig außerhalb eines Hüllkreises 11 befinden, wohingegen sich das Markerelement 8 vollständig innerhalb dieses Hüllkreises 11 befindet.

Die konsolidierte Vorform 10 wird anschließend zu einer sekundären Vorform elongiert. Dabei wird die Vorform 10 in einer Elongier-Vorrichtung mittels eines Halters in vertikaler Ausrichtung der Hohlzylinder-Längsachse 1a gehalten. Die so erzeugte sekundäre Vorform wird abschließend in üblicher Weise in einer Ziehvorrichtung zu einer Mehrkernfaser 20 gezogen.

Das Markerelement 8 liegt bei diesem Ausführungsbeispiel als Markerglasmasse 8 vor, die durch Umformung des ursprünglichen Markerstabes 7 erzeugt worden ist. Bei einer alternativen Verfahrensweise ist die Längsrille 6 beim Konsolidieren des Bauteil-Ensembles 9 zur Vorform 10 ungefüllt (kein Stab oder Rohr ist eingelegt), und das vollständige Kollabieren der Längsrille 6 wird verhindert, indem in ihr ein Überdruck erzeugt und aufrechterhalten wird. Auf diese Weise wird ein Hohlraum erzeugt, der sich entlang der Längsachse 1a erstreckt, und der in der Mehrkernfaser als luftgefüllter Hohlkanal vorliegt. Der Hohlkanal kann als Markerzone dienen, da sich der Brechungsindex von Luft deutlich von dem des Mantelglases 1b unterscheidet.

**Figur 5** zeigt schematisch den Querschnitt der Mehrkernfaser 20. Dieser entspricht abgesehen von den kleineren radialen Abmessungen im Wesentlichen dem Querschnitt der konsolidierten Vorform 10. Die Kernglasbereiche (4a) der ehemaligen Kernstäbe (4) bilden Signalkerne 4b, die sich längs der Faser-Längsachse 20a erstrecken; der ehemalige Füllstab (5) ist Teil des Mantelglasbereichs 1b geworden und visuell davon nicht mehr zu unterscheiden, und das ehemalige Markerelement (8) bildet eine Markerzone 8a. Alle Signalkerne 4b befinden sich vollständig außerhalb des Hüllkreises 11a, wohingegen sich die Markerzone 8a vollständig innerhalb dieses Hüllkreises 11a befindet. Die Markerzone 8a zeichnet sich eine geringe Größe aus, so dass sie der Mehrkernfaser 20 beim Faserziehprozess eine geringe Spannung aufprägt und sich demzufolge ein geringes Faser-Curl einstellt.

## Patentansprüche

1. Verfahren zur Herstellung einer Mehrkernfaser (20), umfassend einen Verfahrensschritt, bei dem ein Bauteil-Ensemble (9) zu der Mehrkernfaser (20) der zu einer Vorform (10) für die Mehrkernfaser (20) umgeformt wird, das einen eine Mittenbohrung (2) und eine Hohlzylinder-Längsachse (1a) aufweisenden Hohlzylinder (1) umfasst, der einen Mantelglasbereich (1b) aus Mantelglas und mehrere mit einem Kernglas belegte Kernglasbereiche (4a) aufweist, wobei mindestens ein Teil der Mittenbohrung (2) von einem Glas-Füllmaterial (5) belegt ist, **dadurch gekennzeichnet, dass** ein an das Glas-Füllmaterial angrenzendes Markerelement (6; 7; 8) aus Markerglas eingesetzt wird, das sich entlang der Mittenbohrung-Längsachse (1a) erstreckt.

2. Verfahren nach Anspruch 1, **dadurch gekennzeichnet, dass** das Markerelement (6; 7; 8) zwischen dem Glas-Füllmaterial (5) und dem Mantelglasbereich (1b) angeordnet wird.

3. Verfahren nach Anspruch 1 oder 2, **dadurch gekennzeichnet, dass** die Herstellung des Bauteil-Ensembles (9) folgende Verfahrensschritte umfasst:
(a) Bereitstellen des Hohlzylinders (1), der das Mantelglas enthält,
(b) Bereitstellen mehrerer Kernstäbe (4), die das Kernglas enthalten,
(c) Bereitstellen eines Füllstabs (5), der eine Füllstab-Längsachse aufweist und der das Glas-Füllmaterial enthält,
(d) Bereitstellen des Markerelements (6; 7; 8),
(e) Erzeugen von Kernstab-Bohrungen (3), die sich entlang der Hohlzylinder-Längsachse (1a) erstrecken,
(f) Einbringen der Kernstäbe (4) in die Kernstab-Bohrungen (3), und
(g) Einbringen des Füllstabs (5) und des Markerelements (6; 7; 8) in die Mittenbohrung (2) unter Bildung des Bauteil-Ensembles (9).

4. Verfahren nach Anspruch 3, **dadurch gekennzeichnet, dass** das Markerelement (7; 8) an dem Füllstab (5) angebracht wird, und sich entlang der Füllstab-Längsachse erstreckt.

5. Verfahren nach Anspruch 3 oder 4, **dadurch gekennzeichnet, dass** das Markerelement (7; 8) in Form eines zylinderförmigen Bauteils oder in Form einer mit dem Füllstab verbundenen Schicht oder Masse bereitgestellt wird.

6. Verfahren nach einem der Ansprüche 3 bis 5, **dadurch gekennzeichnet, dass** der Füllstab (5) eine sich entlang der Füllstab-Längsachse erstreckende Ausnehmung (6) aufweist, die das Markerelement bildet oder in der das Markerelement (7; 8) angeordnet ist.

7. Verfahren nach Anspruch 6, **dadurch gekennzeichnet, dass** die Ausnehmung (6) eine Bohrung und/oder eine Längsrille in der Außenmantelfläche des Füllstabs (5) umfasst.

8. Verfahren nach einem oder mehreren der vorhergehenden Ansprüche, **dadurch gekennzeichnet, dass** das Markerelement (6; 7; 8) einen luftgefüllten, langgestreckten Hohlraum bildet oder dass es ein Markermaterial enthält, das sich in mindestens einer physikalischen und/oder chemischen Eigenschaft vom Mantelglas und vom Glas-Füllmaterial unterscheidet, wobei die Eigenschaft ausgewählt ist aus: Brechungsindex, Farbe, Fluoreszenz und/oder spezifischer Glasdichte.

9. Halbzeug zur Herstellung einer Mehrkernfaser, umfassend einen eine Mittenbohrung (1a) aufweisenden Hohlzylinder (1), der einen Mantelglasbereich (1b) aus Mantelglas und eine Hohlzylinder-Längsachse (1a), und mehrere mit einem Kernglas belegte Kernglasbereiche (4a) innerhalb des Mantelglasbereichs (1b) aufweist, wobei mindestens ein Teil der Mittenbohrung (2) von einem Glas-Füllmaterial (5) belegt ist, **dadurch gekennzeichnet, dass** sich zwischen dem Glas-Füllmaterial (5) und dem Mantelglasbereich (1b) ein an das Glas-Füllmaterial (5) angrenzendes Markerelement (6; 7; 8) entlang der Mittenbohrung-Längsachse (1a) erstreckt.

10. Halbzeug nach Anspruch 9, **dadurch gekennzeichnet, dass** das Markerelement (6; 7; 8) zwischen dem Glas-Füllmaterial (5) und dem Mantelglasbereich(1b) angeordnet ist.

11. Halbzeug nach Anspruch 9 oder 10,**dadurch gekennzeichnet, dass** es weiterhin umfasst: den die Mittenbohrung (2) aufweisenden Hohlzylinder (1), mindestens zwei Kernstäbe (4), die das Kernglas enthalten und die Kernglasbereiche (4a) bilden, mindestens einen in der Mittenbohrung (2) angeordneten Füllstab (5), der eine Füllstab-Längsachse aufweist und der das Glas-Füllmaterial enthält, und mindestens ein in der Mittenbohrung (2) und angrenzend an den Füllstab (5) angeordnetes Markerelement (6; 7; 8).

12. Halbzeug nach Anspruch 11, **dadurch gekennzeichnet, dass** das Markerelement (7; 8) an dem Füllstab (5) angebracht ist.

13. Halbzeug nach Anspruch 11 oder 12, **dadurch gekennzeichnet, dass** der Füllstab (5) eine sich entlang der Füllstab-Längsachse erstreckende Ausnehmung (6) aufweist, die das Markerelement (6) bildet oder in der das Markerelement (7; 8) angeordnet ist, wobei
die Ausnehmung (6) bevorzugt eine Bohrung und/oder eine Längsrille in der Außenmantelfläche des Füllstabs (5) umfasst.

14. Halbzeug nach einem der Ansprüche 11 bis 14, **dadurch gekennzeichnet, dass** das Markerelement (7; 8) in Form eines zylinderförmigen Bauteils oder in Form einer mit dem Füllstab verbundenen Schicht oder Masse vorliegt.

15. Halbzeug nach einem oder mehreren der Ansprüche 8 bis 13, **dadurch gekennzeichnet, dass** das Markerelement (6) einen luftgefüllten, langgestreckten Hohlraum bildet oder dass es ein Markermaterial enthält, das sich in mindestens einer physikalischen und/oder chemischen Eigenschaft vom Mantelglas, vom Kernglas und vom Glas-Füllmaterial unterscheidet, wobei die Eigenschaft ausgewählt ist aus: Brechungsindex, Farbe, Fluoreszenz und/oder spezifischer Glasdichte.
